# EUROPEAN PATENT APPLICATION

(11) **EP 0 618 469 A2**
(43) Date of publication of application: **05.10.1994**
(21) Application number: 94105039.5
(22) Date of filing: 30.03.1994
(51) Int. Cl.: G02B 7/18, G02B 26/10

(54) **Optical deflector**

(30) Priority: 31.03.1993 JP 96920/93; 31.03.1993 JP 97083/93; 24.05.1993 JP 144276/93
(71) Applicant: CANON KABUSHIKI KAISHA, Tokyo (JP)
(72) Inventor: Fukita, Taku, Ohta-ku, Tokyo 146 (JP); Nakasugi, Mikio, Ohta-ku, Tokyo 146 (JP); Suzuki, Yasuo, Ohta-ku, Tokyo 146 (JP); Nabeta, Noboru, Ohta-ku, Tokyo 146 (JP); Tomita, Kenichi, Ohta-ku, Tokyo 146 (JP); Miyamoto, Hideyuki, Ohta-ku, Tokyo 146 (JP)
(74) Representative: Tiedtke, Harro, Dipl.-Ing.

(57) **Abstract**

An optical deflector comprises a deflector (1) for deflecting an optical beam, a cover (2) provided with a cylindrical portion (2a) covering a peripheral surface of the deflector, an opening portion (3) provided in the cover to let the optical beam pass therethrough, and a nearly tubular projecting portion (4) surrounding the opening portion while opening outside the opening portion.

Another optical deflector comprises a deflector for deflecting an optical beam, a cover provided with a cylindrical portion covering a peripheral surface of the deflector, an opening portion provided in the cover to let the optical beam pass therethrough, and a guide member projecting from the cylindrical portion of the cover along a tangent plane thereto.

The optical deflectors can reduce wind noise.

## Description

### BACKGROUND OF THE INVENTION

### Field of the Invention

The present invention relates to an optical deflector for deflection-scanning for example a laser beam at high speed in a laser beam printer or the like.

### Related Background Art

A recent progress is remarkable in increasing the operational speed of optical deflecting apparatus in laser beam printers or laser facsimile machines. For example, a rotary polygon mirror used in the apparatus rotates at such a high speed as ten and several thousand rotations per minute. Such high-speed rotation of rotary polygon mirror increases wind noise during rotation so as to cause big noise. Thus, the rotary polygon mirror is enclosed by a nearly cylindrical cover.

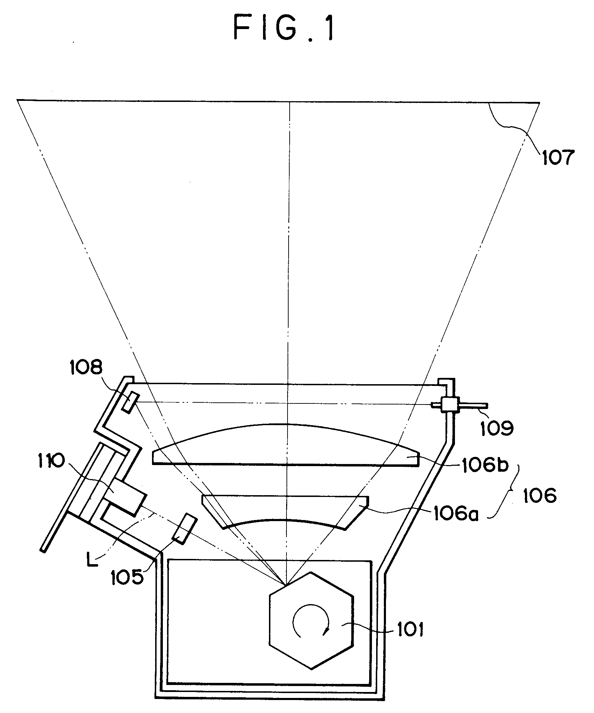

Fig. 1 illustrates the entire structure of a general optical deflecting apparatus, in which a laser beam L emitted from a laser generator 110 is condensed by a cylindrical lens 105 into a beam of predetermined shape, the condensed beam is deflection-scanned by a rotary polygon mirror 101, and the deflected beam is focused through an imaging lens system 106 (106a, 106b) on a photosensitive drum 107. A part of the laser beam reflected by the rotary polygon mirror 101 is guided into an optical fiber 109 by a reflecting mirror 108 to be converted into a scan start signal.

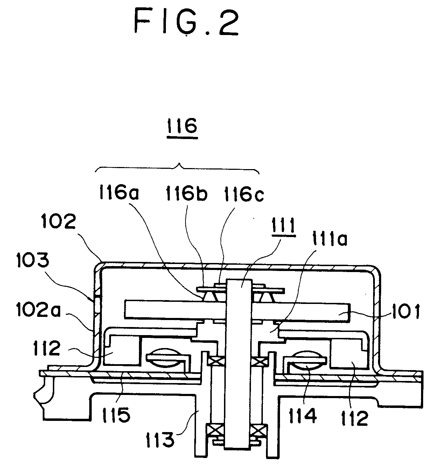

Fig. 2 shows the rotary polygon mirror 101 and a driving unit therefor. The driving unit for rotary polygon mirror 101 has a rotation shaft 111, rotor magnets 112, a stator coil 114 incorporated with a bearing device 113 supporting the rotation shaft 111, and a circuit board 115 for supplying a drive current to the stator coil 114. The rotary polygon mirror 101 is urged against a flange member 111a incorporated with the rotation shaft 111 by an urging mechanism 116 composed of a wave washer 116a, a flat washer 116b and a snap ring 116c, whereby the rotary polygon mirror 101 is incorporated with the rotary shaft 111. The rotary polygon mirror 101 is covered by a nearly cylindrical cover 102, which restricts air flow caused by rotation of the rotary polygon mirror 101 so as to reduce occurrence of wind noise and to prevent the wind noise from leaking out. A window 103 through which a laser beam can pass is provided in a cylindrical portion 102a of the cover 102.

In the above conventional technology, however, the air flowing upon high-speed rotation of rotary polygon mirror inside the cover produces big wind noise because of friction with the peripheral edge of the window when it flows out through the window for passage of laser beam.

### SUMMARY OF THE INVENTION

The present invention has been accomplished taking the above problem in the conventional technology into account. It is an object of the present invention to provide an optical deflector which is reduced in wind noise caused when the air flowing upon high-speed rotation of rotary polygon mirror inside a cover flows out through a window in the cover.

To achieve the above object, an optical deflector of the present invention has a rotary polygon mirror for deflection-scanning illumination light irradiated onto a peripheral surface thereof, and a cover provided with a cylindrical portion covering the peripheral surface, wherein said cylindrical portion of cover is provided with an opening portion for letting the illumination light pass therethrough and a nearly tubular projecting portion surrounding it, said projecting portion opening outside said opening portion.

It is preferred that a projection amount of the projecting portion decreases in the direction opposite to the rotation direction of the rotary polygon mirror.

It is also preferred that the opening portion extends in the rotation direction of rotary polygon mirror and that the projecting portion projects from an edge of the opening portion at the rotation direction end along a tangent plane to the cylindrical portion of cover in the direction opposite to the rotation direction.

The air inside the cover flows at high speed with high-speed rotation of rotary polygon mirror to flow out through the opening portion of cover. The air flowing out through the opening portion flows out along the projecting portion while turning in the rotation direction of rotary polygon mirror. The air loses its rate of flow to slow down as it goes away from the rotary polygon mirror. The slower the flow speed of the air flowing out of the cover, the smaller the wind noise. Therefore, the provision of the projecting portion can reduce the wind noise.

If the projection amount of the projecting portion decreases in the direction opposite to the rotation direction of rotary polygon mirror, the space can be saved with little missing the effect of reduction in wind noise by the projecting portion.

If the opening portion extends in the rotational direction of rotary polygon mirror and the projecting portion projects from the edge of opening portion at the end in the extending direction along the tangent plane to the cylindrical portion of cover in the direction opposite to the rotation direction, the projection amount of the projecting portion in the radial direction increases in the rotation direction of rotary polygon mirror, which further decreases the wind noise.

To achieve the above object, an optical deflector of the present invention has a rotary polygon mirror for deflection-scanning illumination light irradiated onto a peripheral surface thereof, and a cover provided with a cylindrical portion covering the peripheral surface, wherein an opening for letting the illumination light pass therethrough is provided in the cylindrical portion of cover, and a part of the opening is covered by a guide member projecting from the cylindrical portion of cover along a tangent plane thereto in the direction opposite to the rotation direction of rotary polygon mirror.

The air inside the cover flows at high speed with high-speed rotation of rotary polygon mirror to flow out through the opening of cover. The air flowing through the opening turns in the rotation direction of rotary polygon mirror, and loses a part of its flow rate to slow down as it goes away from the peripheral surface of rotary polygon mirror. Since a part of the opening is covered by the guide member projecting from the cylindrical portion of cover along the tangent plane thereto in the direction opposite to the rotation direction of rotary polygon mirror, air with high flow rate near the rotary polygon mirror among the air flowing through the opening flows along the guide member and again flows into the cover, while air going away from the rotary polygon mirror and slowing down flows out thereof. Since the wind noise becomes larger as the air flowing through the opening increases its flow rate, the wind noise can be reduced by the guide member which prevents the air with high flow rate from flowing out through the opening.

To achieve the above object, an optical deflector of the present invention has a rotary polygon mirror for deflection-scanning illumination light irradiated onto a peripheral surface thereof, and a cover provided with a cylindrical portion covering the peripheral surface, wherein an opening for letting the illumination light pass therethrough is provided in the cylindrical portion of cover, and a part of the opening is covered by a guide member projecting from the cylindrical portion of cover to the outside of the tangent plane thereto in the direction opposite to the rotation direction of rotary polygon mirror.

Also, it is preferred that an angle between the tangent plane to the cylindrical portion of cover and the guide member is in the range of 20° to 45° both inclusive.

The air inside the cover flows at high speed with high-speed rotation of rotary polygon mirror to flow out through the opening of cover. The air flowing out through the opening turns in the rotation direction of rotary polygon mirror, and loses a part of its flow rate to slow down as it goes away from the peripheral surface of rotary polygon mirror. Since a part of the opening is covered by the guide member projecting from the cylindrical portion of cover to the outside of the tangent plane thereto in the direction opposite to the rotation direction of rotary polygon mirror, air with high flow rate near the rotary polygon mirror among the air flowing out through the opening flows along the guide member and again flows into the cover, while air going away from the rotary polygon mirror and slowing down flows out to the outside thereof. Since the wind noise becomes larger as the air flowing out through the opening increases its flow rate, the wind noise can be reduced by the guide member which prevents the air with high flow rate from flowing out through the opening.

If the angle between the tangent plane to the cylindrical portion of cover and the guide member is in the range of 20° to 45° both inclusive, the free end of guide member can be located far away from the peripheral surface of rotary polygon mirror even with a small projection amount of the guide member, which greatly reduces the flow rate of air flowing out over the guide member, enhancing the effect to reduce the wind noise.

### BRIEF DESCRIPTION OF THE DRAWINGS

Fig. 1 is an explanatory drawing to illustrate the entire structure of an optical deflecting apparatus;
Fig. 2 is a partial and schematic cross sectional view to show a conventional optical deflector;
Fig. 3 is a partial and schematic cross sectional view to show the main part of an embodiment of optical deflector according to the present invention;
Fig. 4 is a partial and schematic cross sectional view to show another cross section of the main part of the embodiment;
Fig. 5 is a partial and schematic perspective view to show the main part of the embodiment;
Fig. 6 is a partial and schematic cross sectional view to show the main part of a first modification;
Fig. 7 is a partial and schematic perspective view to show the main part of the first modification;
Fig. 8 is a partial and schematic cross sectional view to show the main part of a second modification;
Fig. 9 is a partial and schematic perspective view to show the main part of the second modification;

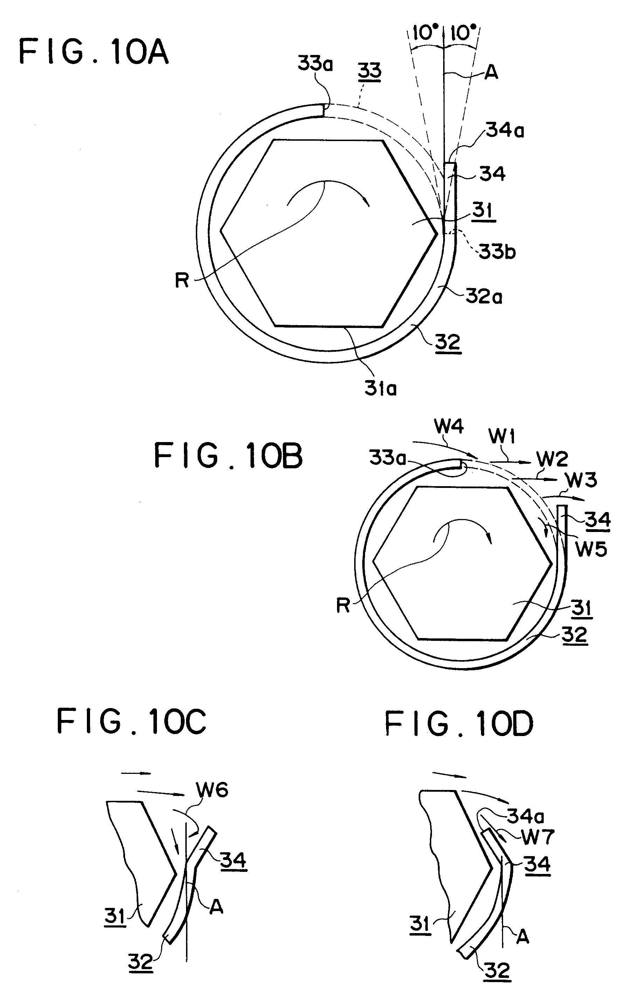

Figs. 10A to 10D are drawings to show the main part of a fourth embodiment, in which Fig. 10A is a partial and schematic cross section of the main part, Fig. 10B an explanatory drawing to illustrate an air flow flowing out through a window of cover, Fig. 10C an explanatory drawing to illustrate a case in which a guide member is inclined toward the outside at an angle larger than 10° relative to the tangent plane to the cover, and Fig. 10D an explanatory drawing to illustrate a case in which a guide member is inclined toward the inside at an angle larger than 10° relative to the tangent plane to the cover;
Fig. 11 is a partial and schematic perspective view to show the main part of the fourth embodiment;
Fig. 12 is a partial and schematic perspective view to show the main part of a fifth embodiment;
Fig. 13 is a partial and schematic perspective view to show a modification of the main part of the fifth embodiment;
Fig. 14 is a partial and schematic cross sectional view to show the main part of a seventh embodiment;
Fig. 15 is a partial and schematic perspective view to show the main part of the seventh embodiment;
Figs. 16A and 16B are drawings to show the major part of an eighth embodiment, in which Fig. 16A is a partial and schematic cross section of the main part and Fig. 16B an explanatory drawing to illustrate an air flow flowing out through a window of cover; and
Fig. 17 is a partial and schematic perspective view to show the main part of the eighth embodiment.

### DESCRIPTION OF THE PREFERRED EMBODIMENTS

Embodiments of optical deflector according to the present invention will be described with reference to the accompanying drawings.

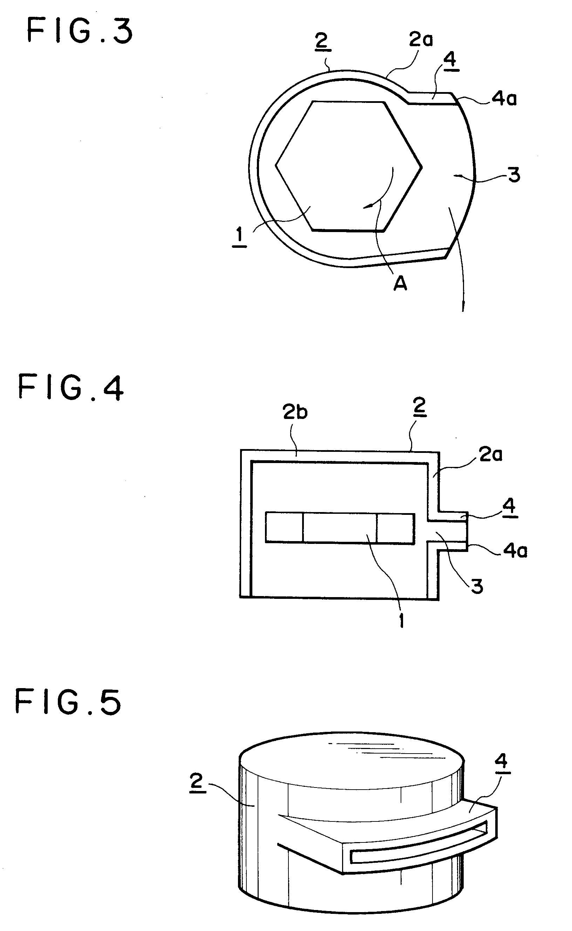

Fig. 3 to Fig. 5 are partial and schematic cross sectional views to show two different cross sections of the main part of the first embodiment, and a partial and schematic perspective view thereof. An optical deflector in the present embodiment is used in an optical deflecting apparatus as shown in Fig. 1, and has a rotary polygon mirror 1 rotated by a driving mechanism in the direction of arrow A, and a nearly cylindrical cover 2 covering it. The cover 2 has a cylindrical wall 2a, which is a cylindrical portion, and a top wall 2b of a disk shape. The cylindrical wall 2a of cover 2 has a window 3, which is an opening portion for passage of a laser beam emitted from a light source onto the rotary polygon mirror 1 and deflection-scanned thereby to form an image on a photosensitive drum through an imaging lens. The window 3 is surrounded by a sound-proof hood 4, which is a nearly tubular projecting portion integral with the cylindrical wall 2a of cover 2. The sound-proof hood 4 has an approximately same cross section as the shape of the opening of window 3. The sound-proof hood 4 projects radially outwardly from the cylindrical wall 2a of cover 2 and has an opening edge 4a opening in the same direction as the window 3.

When the rotary polygon mirror 1 rotates at high speed, the air inside the cover 2 flows at high rate with the rotation. Then, a part of the air flows through the window 3 and the sound-proof hood 4 and then out from the opening edge 4a to the outside. Since the sound-proof hood 4 projects radially outwardly from the cylindrical wall 2a of cover 2, as described above, the air flowing out from the opening edge 4a of sound-proof hood 4 loses a part of its flow rate while flowing inside the sound-proof hood 4, so as to slow down. This greatly reduces wind noise due to friction between the air flowing out of the cover 2 from the window 3 and the opening edge 4a of sound-proof hood 4 or due to air eddies produced around the window 3. Also, the sound-proof hood 4 absorbs a part of wind noise caused by a friction between the rotary polygon mirror 1 and the air inside the sound-proof hood 4, which can reduce the wind noise leaking from the cover 2 to the outside. An experiment ensured that noise was lowered by 4 to 8 dB by provision of the sound-proof hood in the present embodiment.

Next described is a modification of the optical deflector of the present embodiment.

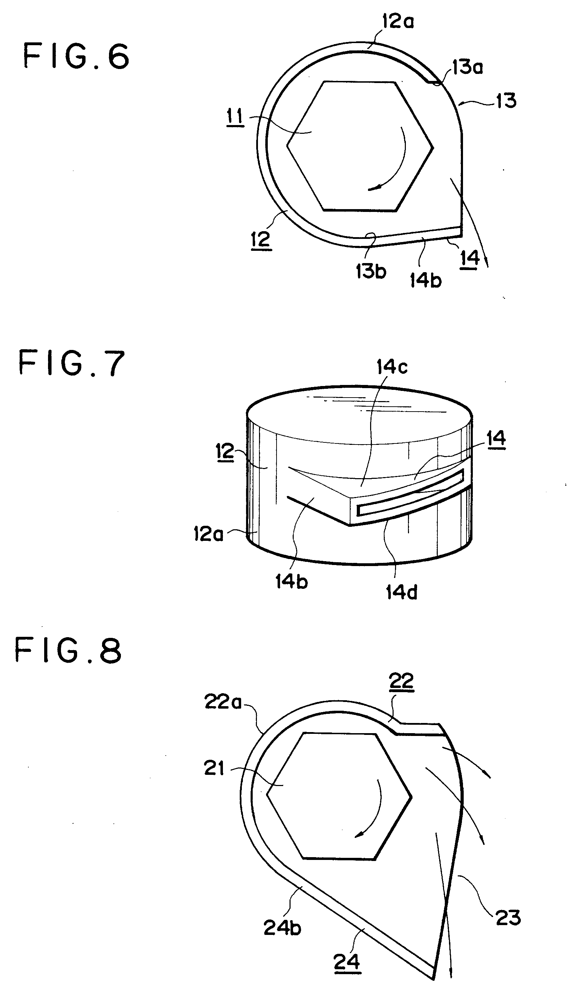

Fig. 6 and Fig. 7 show a first modification (or second embodiment). A cover 12 in this modification has a rostral sound-proof hood 14 in place of the nearly tubular sound-proof hood 4 having the approximately same cross section as the shape of aperture of the window 3 in the first embodiment. The sound-proof hood 14 is composed of a side wall 14b, and nearly triangular top and bottom walls 14c and 14d integral therewith at the upper and lower ends thereof. The side wall 14b projects from a side edge 13b on the downstream side with respect to the rotation direction of rotary polygon mirror 11, out of the both side edges 13a, 13b of window 13, along the tangential direction to the cylindrical wall 12a of cover 12. The sound-proof hood 14 of this modification decreases its projection amount in the direction opposite to the rotation direction of rotary polygon mirror 11 and has no projection at the side edge 13a on the upstream side of the window 13, which permits a lens or the like to be set near this portion. In this modification, the opening portion is elongated in the rotation direction of rotary polygon mirror, and the projecting portion projects from the edge at the end in the rotation direction of the opening portion along the tangent plane to the cylindrical portion of cover in the direction opposite to the rotation direction.

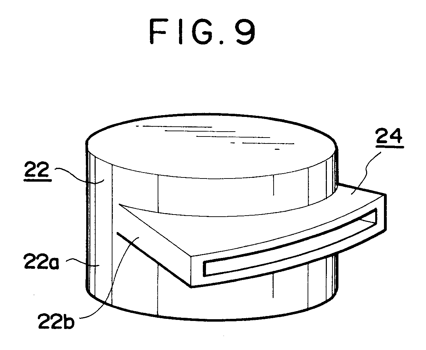

Fig. 8 and Fig. 9 show a second modification (or third embodiment). A cover 22 of this modification is arranged as follows: A window 23 similar to the window 3 in the first embodiment is prolonged on the downstream side with respect to the rotation direction; a sound-proof hood 24 similar to the sound-proof hood 4 of the first embodiment has a side wall 24b on the downstream side with respect to the rotation direction of rotary polygon mirror 21 as arranged to extend along the tangent plane to the cylindrical wall 22a of cover 22; whereby a cross section of the sound-proof hood 24 is enlarged along the rotation direction of rotary polygon mirror 21. Air flowing out from the cover 22 through the window 23 turns in the rotation direction and is discharged beyond the edge line of the downstream side wall 24b of sound-proof hood 24, which further reduces the noise due to the wind noise.

As described above, the optical deflector of the present invention is so arranged that the rotary polygon mirror 1 is covered by the nearly cylindrical cover 2 and that the window 3 for letting the laser beam pass therethrough is provided in the cylindrical wall 2a of cover 2. The cylindrical wall 2a has the sound-proof hood 4 surrounding the window 3 and the sound-proof hood 4 projects radially outwardly from the cylindrical wall 2a of cover 2, whereby the air flowing out from the window 3 reduces its flow rate while passing through the sound-proof hood 4.

As so arranged, the present invention can enjoy the following advantage.

The wind noise can be reduced when the air flowing inside the cover of rotary polygon mirror with the high-speed rotation of rotary polygon mirror flows out from the opening portion of cover. Consequently, an optical deflector with low noise can be realized.

Further embodiments of optical deflector according to the present invention will be described with reference to other drawings.

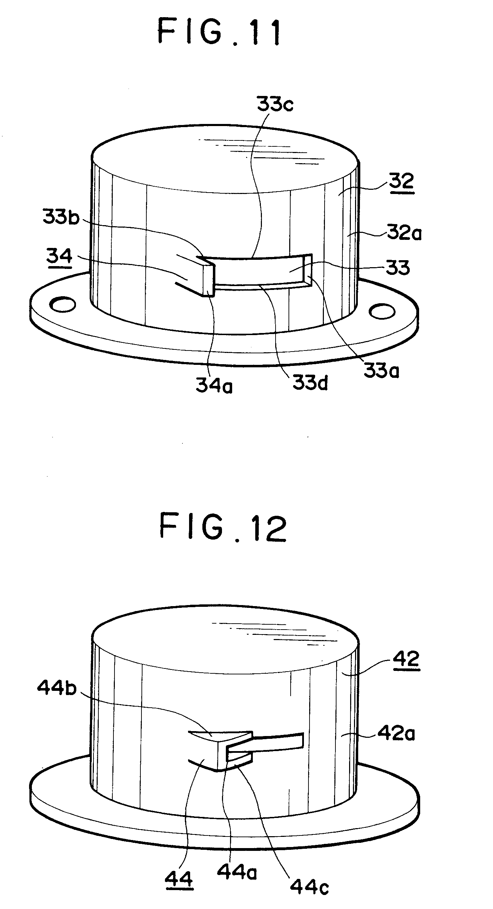

Fig. 10A is a partial and schematic cross sectional view to show the main part of the fourth embodiment. An optical deflector of the present embodiment is used in an optical deflecting apparatus as shown in Fig. 1. A rotary polygon mirror 31 is covered by a nearly cylindrical cover 32. The cover 32 has a window 33, which is an opening in a cylindrical portion 32a. A laser beam emitted from a light source and impinging on a reflecting surface 31a of peripheral surface of rotary polygon mirror 31 through the window 33 is deflection-scanned with rotation of rotary polygon mirror 31 and then is imaged on a photosensitive drum through an imaging lens system. The window 33 is a nearly rectangular opening, as shown in Fig. 11, having a circumferential edge composed of a pair of side edges 33a, 33b extending in the direction parallel to the rotation axis of rotary polygon mirror 31, and a pair of end edges 33c, 33d extending in parallel with each other between the two side edges. The side edge 33b on the downstream side with respect to the rotation direction of rotary polygon mirror 31 as shown by the arrow R (in Fig. 10A), out of the two side edges 33a, 33b, is provided with a guide piece 34 integral therewith, which is a guide member projecting from the cylindrical portion 32a of cover 32 along the tangent plane A thereto in the direction opposite to the rotation direction. The guide piece is preferably formed by blanking for making the window 33 in the cover 32 such that a deviation to the tangent plane A is not more than 10°. Thus, the guide member projects out from a portion of the circumferential edge of opening.

When the rotary polygon mirror 31 rotates at high speed, the air inside the cover 32 also flows at high rate in the circumferential direction with the rotation, whereby a part thereof is discharged from the window 33 to the outside. The air flowing out from the window 33 turns in the rotation direction of rotary polygon mirror 31, as shown by arrows W1 to W3 in Fig. 10B. A negative pressure occurs near the side edge 33a on the upstream side with respect to the rotation direction of rotary polygon mirror 31, out of the two edges 33a, 33b of window 33. The negative pressure draws the external air into the cover 32 by suction, as shown by arrow W4. On the other hand, the air flow moving with the rotary polygon mirror 31 is divided into two flows by the guide piece 34 near the downstream side edge 33b of window 33. Air flowing at high speed near the peripheral surface of rotary polygon mirror 31 again flows into the cover 32, as shown by arrow W5, while the rest is discharged to the outside. The guide piece 34 extends toward the upstream along the tangent plane A to the cylindrical portion 32a of cover 32. Accordingly, the free end 34a of the guide piece 34 is located radially outside the cylindrical portion 32a of cover 32. Thus, the air flow flowing out beyond the free end 34a goes away from the surface of rotary polygon mirror 31, and loses a part of flow rate attained upon rotation so as to slow down the flow, which will cause no big wind noise. Also, the air flow again flowing into the cover 32 along the guide piece 34 is gradually compressed along the inner surface of the guide piece 34. Therefore, the noise due to eddies or turbulence is very low.

If the guide piece 34 were inclined more outwardly at an angle larger than 10° relative to the tangent plane A to the cylindrical portion of cover 32, as shown in Fig. 10C, eddies as shown by arrow W6 would be produced by the air flow again flowing into the cover 32 along the inner surface of guide piece 34, which would cause new noise. In contrast, if the guide piece 34 were inclined more inwardly at an angle larger than 10° relative to the tangent plane A to the cylindrical portion 32a of cover 32, as shown in Fig. 10D, the free end 34a of guide piece 34 would be too close to the surface of rotary polygon mirror 31 to sufficiently reduce the flow rate of air flowing out beyond the free end, as shown by arrow W7, which would cause big wind noise.

An experiment showed that the noise by the rotary polygon mirror of the present embodiment was 3 to 8 dB lower than that by the conventional one.

Fig. 12 shows the main part of the fifth embodiment. In the present embodiment, a top wall 44b and a bottom wall 44c, which are projecting portions, are provided for a circumferential edge of guide piece 44 except for the free end 44a thereof, which is an end edge in the projecting direction of guide piece 44 similar to the guide piece 34 in the fourth embodiment, and the top and bottom walls are made integral with a cylindrical portion 42a of cover 42. Since the circumferential edge except for the free end 34a as described above is open in case of the previously-described guide piece 34 in the fourth embodiment, the air flow could leak beyond the open edge portions so as to produce eddies, resulting in noise. The present embodiment can prevent it. Also, the present embodiment can improve the stiffness and the strength of the guide piece and can prevent chatter due to vibration. In the fifth embodiment, the guide member has the projecting portions projecting from the entire circumferential edge except for the end edge in the projecting direction toward the cylindrical portion of cover and formed integral therewith.

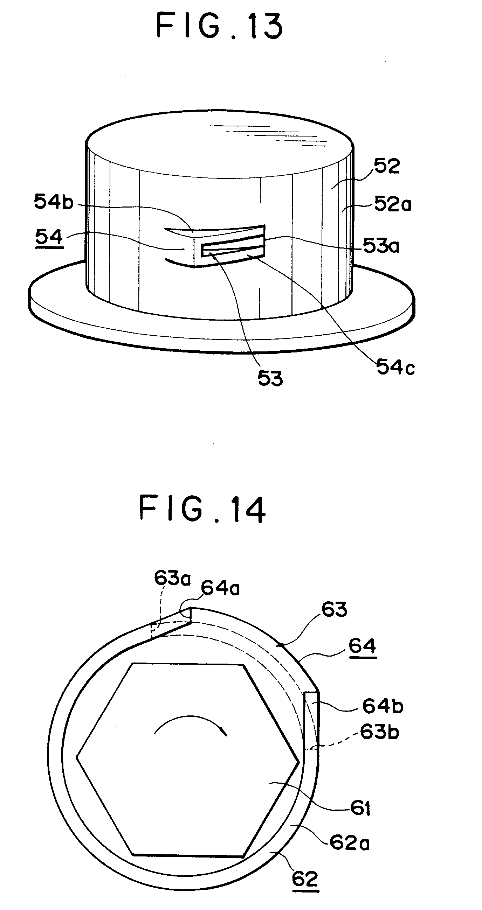

Fig. 13 shows the main part of a modification (or sixth embodiment) of the fifth embodiment. In this modification, a top wall 54b and a bottom wall 54c of guide piece 54 are extended to an upstream side edge 53a of window 53. This takes an opening portion of cover 52 away from the rotary polygon mirror, which reduces a leakage of wind noise by the rotary polygon mirror through the window 53 to the outside.

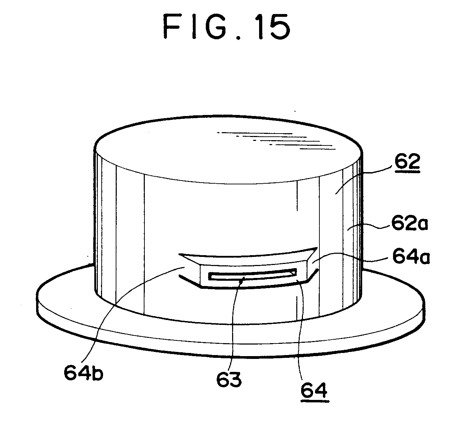

Fig. 14 and Fig. 15 show the main part of the seventh embodiment. The present embodiment is provided with a tubular member 64 having guide walls 64a, 64b in place of the guide piece 34 in the fourth embodiment. The guide walls 64a, 64b are guide members projecting in mutually opposite directions from a cylindrical portion 62a along tangent planes thereto at an upstream side edge 63a and at a downstream side edge 63b of window 63 in a cover 62, respectively. Since the guide wall 64a as the second guide member projecting in the same direction as the rotation direction of rotary polygon mirror 61 is provided at the upstream side edge 63a of window 63 in addition, it can reduce an amount of air newly drawn by suction into the cover 62 from the upstream side of window 63. In addition, the total opening portion of cover 62 is set away from the rotary polygon mirror 61, which can reduce a leakage of wind noise by the rotary polygon mirror 61 to the outside.

In the seventh embodiment, the guide member is a part of the tubular member surrounding the aperture of cover, while the other portion of the tubular member is the second guide member projecting from the cylindrical portion of cover along the tangent plane thereto in the same direction as the rotation direction of rotary polygon mirror.

As described above, the optical deflector of the present invention is so arranged that the rotary polygon mirror 31 has the reflecting surface 31a for reflecting a laser beam on the peripheral surface and rotates at high speed in the direction of arrow R to deflection-scan the laser beam. The rotary polygon mirror 31 is covered by the nearly cylindrical cover 32, and the cover 32 is provided with the window 33 for letting the laser beam pass therethrough. The guide piece 34 projecting in the direction opposite to the rotation direction along the tangent plane A to the cylindrical portion 32a of cover 32 is given to the side edge 33b of window 33 on the downstream side with respect to the rotation direction of rotary polygon mirror 31, and the free end 34a of the guide piece 34 is located at a position radially outside the inner surface of cover 32. Therefore, the air flowing out beyond the free end 34a goes away from the surface of rotary polygon mirror 31 to reduce its flow rate.

As so arranged, the present invention can enjoy the following advantage.

The optical deflector reduces the wind noise due to the air flowing out through the window in the cover for rotary polygon mirror. Consequently, the noise of optical deflector can be greatly reduced.

Further embodiments of optical deflector according to the present invention will be described with reference to the other drawings.

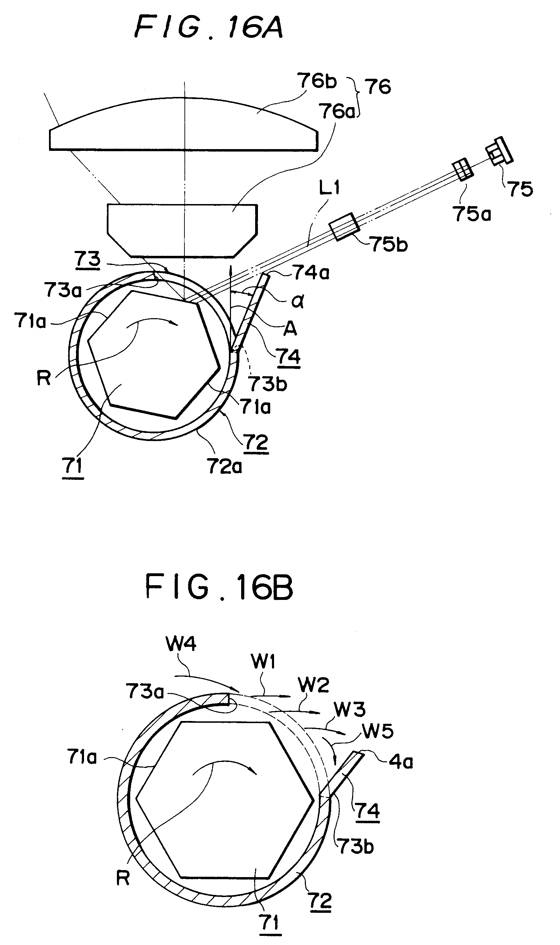

Fig. 16A is a partial and schematic cross sectional view to show the main part of the eighth embodiment. An optical deflector of the present embodiment is used in an optical deflecting apparatus as shown in Fig. 1. A rotary polygon mirror 71 is covered by a nearly cylindrical cover 72. The cover 72 has a window 73, which is an opening in a cylindrical portion 72a of cover. A light source 75 emits a laser beam L₁, which passes through a collimator lens 75a and a cylindrical lens 75b and then through the window 73 to impinge on a reflecting surface 71a of peripheral surface of rotary polygon mirror 71. The laser beam L₁ impinging on the reflecting surface 71a is deflection-scanned by rotation of rotary polygon mirror 71, and then passes through an imaging lens system 76 composed of a spherical lens 76a and a toric lens 76b to form an image on a photosensitive drum, which is a recording medium.

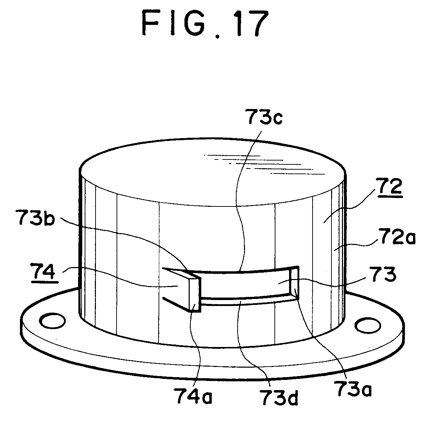

The window 73 is a nearly rectangular opening having a circumferential edge composed of a pair of side edges 73a, 73b extending in parallel with the rotation axis of rotary polygon mirror 71 and a pair of end edges 73c, 73d extending in parallel with each other between the two side edges, as shown in Fig. 17. A guide piece 74 is integrally provided at the downstream side edge 73b with respect to the rotation direction of rotary polygon mirror 71 as indicated by arrow R (in Figs. 16A and 16B), out of the two side edges 73a, 73b. The guide piece 74 is a guide member projecting from the cylindrical portion 72a of cover 72 in the direction opposite to the rotation direction and outwardly outside the tangent plane A thereto. The guide piece 74 is formed by blanking for making the window 73 in the cover 72, and an angle α to the tangent plane A is within the range of 20° to 45° both inclusive. The cover 72 is fixed to a circuit board for an unrepresented motor by screwing at the flange portion thereof. As described, the guide member projects from a part of the circumferential edge of aperture.

When the rotary polygon mirror 71 rotates at high speed, the air inside the cover 72 also flows at high flow rate in the circumferential direction with the rotation, and a part of the air is discharged out through the window 73. The air flowing out through the window 73 turns in the rotation direction of rotary polygon mirror 71, as shown by arrows W1 to W3 in Fig. 16B. A negative pressure occurs near the side edge 73a on the upstream side with respect to the rotation direction of rotary polygon mirror 71, out of the both edges 73a, 73b of window 73. The negative pressure draws the external air by suction into the cover 72, as shown by arrow W4. On the other hand, the guide piece 74 divides the air flow flowing with the rotary polygon mirror 71 into two flows near the downstream side edge 73b of window 73. An air flow flowing at high rate near the peripheral surface of rotary polygon mirror 71 flows again into the cover 72, as shown by arrow W5, while the rest is discharged to the outside. The guide piece 74 extends outwardly of the tangent plane A to the cylindrical portion 72a of cover 72, so that the free end 74a thereof is located radially outside the cylindrical portion 72a of cover 72. Thus, the air flow flowing out beyond the free end goes away from the surface of rotary polygon mirror 71 to lose a part of flow rate attained during the rotation so as to slow down, causing no big wind noise. Also, since the guide piece 74 projects at an angle within the range of 20° to 45° both inclusive relative to the tangent plane A to the cylindrical portion 72a of cover 72, the free end 74a can be located far away from the peripheral surface of rotary polygon mirror 71. Accordingly, without increasing the projection amount of guide piece 74 or without increasing the inner diameter of cylindrical portion 72a of cover 72, the air flow with high flow rate can be prevented from flowing out through the window 73 and the noise due to the wind noise can be reduced. If the inner diameter of cylindrical portion 72a of cover 72 were increased, a gap distance between the peripheral surface of rotary polygon mirror 71 and the window 73 would increase. Then, the air flow flowing out of the cover 72 through the window 73 would decrease its flow rate as it goes away from the peripheral surface of rotary polygon mirror 71, which could reduce the wind noise. However, such an arrangement increases the size of the entire optical deflector because of the increased diameter of cover 72, which is not preferable.

An experiment showed that the noise by the rotary polygon mirror of the present embodiment was 3 to 8 dB lower than that by the conventional one.

In the above embodiments, the cover may be mounted on the circuit board for drive motor of the rotary polygon mirror, or may be formed integral with a lid hermetically closing the inside of optical box, either of which can enjoy the same effect.

As described above, the optical deflector of the present invention is so arranged that the rotary polygon mirror 71 has the reflecting surface 71a for reflecting a laser beam on the peripheral surface and is rotated at high speed in the direction of arrow R to deflection-scan the laser beam. The rotary polygon mirror 71 is covered by the nearly cylindrical cover 72, and the cover 72 has the window 73 for letting the laser beam pass therethrough. The side edge 73b of window 73 on the downstream side with respect to the rotation direction of rotary polygon mirror 71 is provided with the guide piece 74 projecting outwardly outside the tangent plane A to the cylindrical portion 72a of cover 72 and in the direction opposite to the rotation direction at an angle in the range of 20° to 40° both inclusive relative to the tangent plane, so that the free end 74a thereof may be located radially outwardly far away from the cover 72. Thus, the air flowing out beyond the free end goes away from the surface of rotary polygon mirror 71 to reduce its flow rate.

As so arranged, the present invention can enjoy the following advantage.

The invention can reduce the wind noise due to the air flowing out through the opening of cover for rotary polygon mirror. As a result, the noise of optical deflector can be greatly reduced.

An optical deflector comprises a deflector for deflecting an optical beam, a cover provided with a cylindrical portion covering a peripheral surface of the deflector, an opening portion provided in the cover to let the optical beam pass therethrough, and a nearly tubular projecting portion surrounding the opening portion while opening outside the opening portion.

Another optical deflector comprises a deflector for deflecting an optical beam, a cover provided with a cylindrical portion covering a peripheral surface of the deflector, an opening portion provided in the cover to let the optical beam pass therethrough, and a guide member projecting from the cylindrical portion of the cover along a tangent plane thereto.

The optical deflectors can reduce wind noise.

## Claims

1. An optical deflector comprising;
a deflector for deflecting an optical beam;
a cover provided with a cylindrical portion covering a peripheral surface of said deflector;
an opening portion provided in said cover to let said optical beam pass therethrough; and
a nearly tubular projecting portion surrounding said opening portion, said projecting portion opening outside said opening portion.

2. An optical deflector according to Claim 1, wherein a projection amount of said projecting portion decreases in a direction opposite to a rotation direction of said deflector.

3. An optical deflector according to Claim 1, wherein said deflector is a rotary polygon mirror.

4. An optical deflector according to Claim 1, wherein said optical deflector is used in a laser beam printer.

5. An optical deflector comprising:
a deflector for deflecting an optical beam;
a cover provided with a cylindrical portion covering a peripheral surface of said deflector;
an opening portion provided in said cover to let said optical beam pass therethrough; and
a guide member projecting from said cylindrical portion of the cover along a tangent plane thereto.

6. An optical deflector according to Claim 5, wherein said guide member projects in a direction opposite to a rotation direction of said deflector.

7. An optical deflector according to Claim 5, wherein said guide member projects from a portion of a circumferential edge of said opening portion.

8. An optical deflector according to Claim 5, wherein an angle between said tangent plane to the cylindrical portion of cover and said guide member is not more than 10°.

9. An optical deflector according to Claim 5, wherein an angle between said tangent plane to the cylindrical portion of cover and said guide member is in the rang of 20° to 45° both inclusive.

10. An optical deflector according to Claim 5, wherein said deflector is a rotary polygon mirror.

11. An optical deflector according to Claim 5, wherein said optical deflector is used in a laser beam printer.
